# EUROPEAN PATENT SPECIFICATION

(11) **EP 4 418 629 B1**
(45) Date of publication and mention of the grant of the patent: **28.10.2026**
(21) Application number: 23209035.7
(22) Date of filing: 10.11.2023
(51) Int. Cl.: H04L 67/025, H04L 67/12, H04L 41/0246, H04L 41/0803

(54) **COMMUNICATION METHOD AND SYSTEM**
KOMMUNIKATIONSVERFAHREN UND -SYSTEM
PROCÉDÉ ET SYSTÈME DE COMMUNICATION

(30) Priority: 15.02.2023 CN 202310120834
(43) Date of publication of application: 21.08.2024
(73) Proprietor: Sungrow (Shanghai) Co., Ltd., Shanghai 201203 (CN)
(72) Inventor: Zhang, Gan, Hefei, 230088 (CN); Yao, Keliang, Hefei, 230088 (CN); He, Yi, Hefei, 230088 (CN); Yang, Yu, Hefei, 230088 (CN)
(74) Representative: Epping - Hermann - Fischer

(56) References cited:
- EP-A1- 2 677 693
- US-A1- 2010 138 171

## Description

### FIELD

The present disclosure relates to the technical field of information interaction, and in particular, to a communication method, apparatus and system.

### BACKGROUND

In various application systems, multiple master nodes are set to communicate with multiple slave nodes, so as to complete optimization of functions in the system and a networking process. As a downstream device of the master node, the slave node receives instructions from the master node to complete a task issued by the master node. In an initial stage of networking, each slave node needs to actively search for a slave node for a communication connection. In a conventional technology, the master node cannot know the number of slave nodes and related information thereof. In the searching process for the slave node, the slave nodes compete to report on reception of a relevant instruction. The slave node which successfully reports realizes communication with the master node.

In fact, in the reporting process of the slave node, communication signals between the slave nodes and the master node are different. Therefore, a slave node having a strong communication signal may report information to the same master node multiple times, while a slave node having a poor communication signal may fail to report information. Repeated reporting from the slave node and repeated sending of a search instruction by the master node can easily cause communication congestion, so that the slave node having the poor communication signal is more difficult to report a message. In the conventional technology, in a communication process between the master nodes and the slave nodes, some of the slave nodes are susceptible to failure of communication with the master node, which increases a networking period.

Document EP 2677693 A1 discloses a communication system including a programmable logic controller and multiple controlled devices connected to the programmable logic controller, where respective addresses have been assigned to the plurality of controlled devices in accordance with a predetermined rule and where when the programmable logic controller multicasts a request directed to the controlled devices, the multiple controlled devices having received the request multicast respective responses to the request in an order determined on the basis of a predetermined rule.

Document US 2010138171 A1 discloses an apparatus for measuring aerodynamic performance, including a batten, multiple pressure differential sensors, and a plenum. The sensors may be in communication with a computer and the sensors may be networked in an asymmetric daisy chain network for uplink communications from the computer and networked in parallel as a bus for downlink communications to the computer.

### SUMMARY

In view of this, the present disclosure provides a communication method and system as set out in the appended set of claims. With the method, the slave node can stop communication with the master node after successfully reporting an identification code. Thereby, communication congestion caused by repeated reporting is avoided.

A communication method applied to a communication system including at least one master node and at least one slave node is provided. The method includes: sending, by the at least one master node, an information query request to the at least one slave node in a preset time period; receiving, by the at least one slave node, the information query request from the at least one master node; and obtaining, by the at least one slave node from the information query request, identification information and a report time limit; determining, by the at least one slave node based on the identification information, whether the at least one lave node has reported an identification code of the slave node to the at least one master node; ignoring, by the at least one slave node, the information query request in a case that the at least one slave node has reported the identification code of the at least one slave node to the at least one master node; reporting, by the at least one slave node, a response message carrying the identification code to the master node within the report time limit in a case that the slave node has not reported the identification code of the slave node to the master node; obtaining, by the at least one master node, the identification code of the at least one slave node from the response message, in a case that the response message reported by the at least one slave node in response to the information query request is received within the preset report time limit; and updating, by the at least one master node, the identification information based on the identification code, where the at least one slave node, which reports the response message previously, stops reporting the response message to the at least one master node based on the updated identification information, in a case that the information query request is received again.

In an embodiment, the identification information includes a node query number of the master node and an identification code list; the node query number is a unique identification number of the master node, the node query number is for identifying the master node; and the identification code list is for recording an identification code received by the master node.

In an embodiment the updating the identification information based on the identification code includes: updating the identification code to the identification code list in the identification information.

In an embodiment, the method further includes: starting a preset timer when the information query request is send for the first time; and interrupting a communication process with the slave nodes, in a case that no response message is received from any of the slave nodes after the information query request is sent multiple times, or in a case that the timer exceeds a preset query time.

In an embodiment, the determining, based on the identification information, whether the slave node has reported the identification code of the slave node to the master node includes: obtaining, from the identification information, a node query number of the master node; determining whether the slave node has recorded the node query number ; determining that the slave node has reported the identification code of the slave node to the master node, in a case that the slave node has recorded the node query number; and determining that the slave node has not reported the identification code of the slave node to the master node, in a case that the slave node has not recorded the node query number.

In an embodiment, the method further includes: recording the node query number of the master node, after the slave node reports the response message carrying the identification code to the master node.

In an embodiment, the determining, based on the identification information, whether the slave node has reported the identification code of the slave node to the master node includes: obtaining, from the identification information, an identification code list recorded by the master node; determining whether the identification code of the slave node is recorded in the identification code list; determining that the slave node has reported the identification code of the slave node to the master node, in a case that the identification code of the slave node is recorded in the identification code list; and determining that the slave node has not reported the identification code of the slave node to the master node, in a case that the identification code of the slave node is not recorded in the identification code list.

In an embodiment, the method further includes: generating the identification code of the slave node in a case that the salve node receives the information query request for the first time.

In an embodiment, the reporting a response message carrying the identification code to the master node within the report time limit includes: detecting whether the slave node generates the response message carrying the identification code; starting a preset reporting mechanism and generating the response message carrying the identification code, in a case that the slave node does not generate the response message carrying the identification code; and reporting the response message carrying the identification code to the master node within the report time limit in a competition manner, according to the reporting mechanism.

In an embodiment, the method further includes: suspending the reporting of the response message to the master node, in a case that the slave node fails to report the response message to the master node within the report time limit.

A communication system is provided. The system includes: at least one master node and at least one slave node. The communication system performs the communication method described above.

Compared with the conventional technology, the present disclosure has the following advantages.

In the communication method, and system, the master node sends an information query request to the slave node. The slave node determines, based on identification information in the information query request, whether an identification code has been reported to the master node. The slave node ignores the information query request if the identification code has been reported to the master node; and the slave node reports a response message carrying the identification code to the master node, if the identification code has not been reported to the master node. On reception of the response message, the master node obtains the identification code from the response message and updates the identification information based on the identification code. Based on the updated identification information, the slave node stops reporting the identification code to the master node when the information query request is received from the master node again. In the present disclosure, the slave node reports the identification code to one master node only once to identify the slave node, and does not report the identification code repeatedly. Therefore, communication congestion is avoided.

### BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.
Figure 1 is a flow chart of a communication method applied to a master node according to an embodiment of the present disclosure;
Figure 2 is a structural diagram of a communication apparatus applied to a master node according to an embodiment of the present disclosure;
Figure 3 is a flow chart of a communication method applied to a slave node according to an embodiment of the present disclosure;
Figure 4 is a flow chart of a communication method applied to a slave node according to another embodiment of the present disclosure;
Figure 5 is a flow chart of a communication method applied to a slave node according to yet another embodiment of the present disclosure;
Figure 6 is a structural diagram of a communication apparatus applied to a slave node according to an embodiment of the present disclosure;
Figure 7 is a block diagram of a communication system according to an embodiment of the present disclosure; and
Figure 8 is a schematic diagram of communication between a master node and a slave node according to an embodiment of the present disclosure.

### DETAILED DESCRIPTION

Hereinafter technical solutions of embodiments of the present disclosure are described clearly and completely in conjunction with the drawings of the embodiments of the present disclosure. Apparently, the embodiments described below are only some embodiments, rather than all the embodiments of the present disclosure. Any other embodiments obtained by those skilled in the art based on the embodiments in the present disclosure without any creative effort shall fall within the protection scope of the present disclosure.

In the present disclosure, the relationship terminologies such as "first" and "second" are only used to distinguish one entity or operation from another entity or operation, rather than to necessitate or imply an actual relationship or order between the entities or operations. Moreover, terms of "include", "comprise" or any other variants are intended to be non-exclusive. Therefore, a process, method, article or device including a series of elements includes not only the elements but also other elements that are not enumerated, or further includes the elements inherent for the process, method, article or device. Unless expressively limited otherwise, the statement "comprising (including) one..." does not exclude existence of other similar elements in the process, method, article or device.

The present disclosure is applicable to a variety of general-purpose or dedicated computing device environments or configurations. For example, the present disclosure is applicable to a personal computer, a server computer, a handheld device or portable device, a tablet device, a multi-processor device, a distributed computing environment including any of the above, or the like.

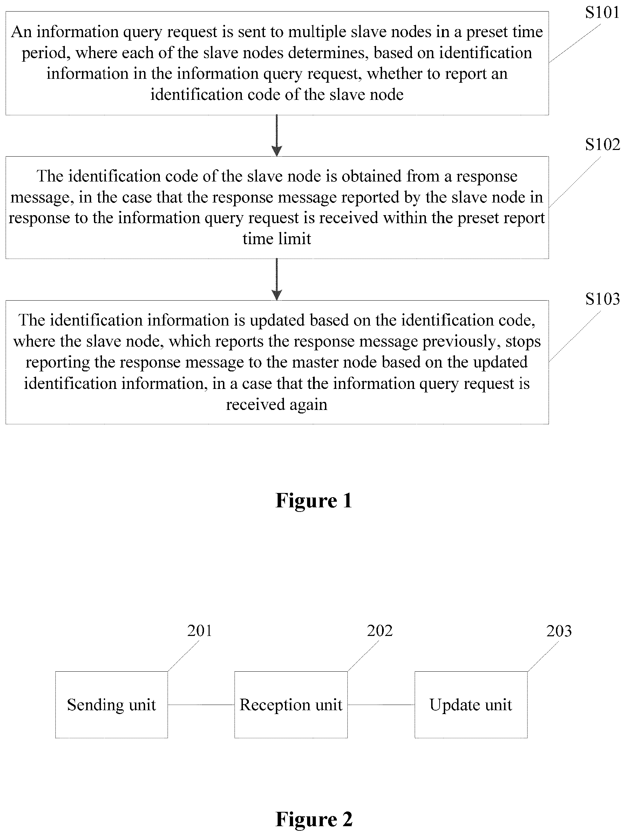

A communication method is provided in an embodiment of the present disclosure. The method may be applied to a master node. Figure 1 shows a flow chart of the method when being applied to a master node. The method includes steps S101 to S103.

In S101, an information query request is sent to multiple slave nodes in a preset time period. Each of the slave nodes determines, based on identification information in the information query request, whether to report an identification code of the slave node.

In an embodiment, the information query request is sent to the slave nodes multiple times in a networking process. The information query request includes identification information and a report time limit. The slave node may determine, based on the identification information, whether the slave node has reported the identification code to the master node. The slave node ignores the information query request in the case that the identification code has been reported. The slave node may report the identification code to the master node within the report time limit, in the case that the identification code has not been reported. The identification code is an identifier used to identify the slave node to the master node as a site.

It should be noted that the master node may send the information query request to all slave nodes within a preset range. One slave node may receive information query requests from multiple master nodes.

It should be further noted that the identification information includes a node query number and an identification code list. The node query number is a unique identification number of the master node, which is used to identify the master node. The identification code list is used to record an identification code received by the master node.

It can be understood that the slave node may obtain the node query number and the identification code list from the identification information on reception of the information query request. The slave node may determine, based on the node query number, whether the identification code has been reported to the master node corresponding to the node query number. Alternatively, the slave node may query the identification code list to determine whether the identification code of the slave node is recorded.

In S102, the identification code of the slave node is obtained from a response message, in the case that the response message reported by the slave node in response to the information query request is received within the preset report time limit.

It should be noted that after determining that the identification code needs to be reported to the master node, the slave node generates a response message carrying the identification code and reports the response message to the master node within the report time limit. The master node obtains the identification code of the slave node from the response message.

In S103, the identification information is updated based on the identification code, where the slave node, which reports the response message previously, stops reporting the response message to the master node based on the updated identification information, in a case that the information query request is received again.

It can be understood that after the slave node reports the identification code to the master node, the identification information of the master node is modified. The slave node stops reporting the identification code to the master node based on the updated identification information, when the information query request of the master node is received from the master node again.

In an embodiment, the identification information is updated by updating the identification code to the identification code list in the identification information. Once receiving a response message reported by a slave node, the master node obtains the identification code from the message and updates the identification code into the identification code list. In this way, the information query request to be sent next includes the updated identification code list. In the case that the slave node determines that the identification code of the slave node is included in the updated identification code list, the slave node stops reporting the response message carrying the identification code to the master node.

It should be noted that the node query number of the master node in the identification information is not changed after the update of the identification information. The slave node may record the node query number, after the reporting of the response message for the first time. When the slave node receives the information query request from the master node again, the slave node may determine that the node query number in the updated identification information has been recorded. Therefore, the slave node stops reporting the response message carrying the identification code to the master node.

In an embodiment, the master node sends the information query request to multiple slave nodes in a preset time period. Each of the slave nodes determines, based on the identification information in the information query request, whether to report the identification code of the slave node. The slave node reports the response message carrying the identification code within the report time limit, in the case that the identification code is determined to be reported. On reception of the response message, the master node obtains the identification code from the response message and updates the identification information based on the identification code. On repeated reception of the information query request form the master node, the slave node may determine, based on the updated identification information, whether to report the identification code. Since the identification information is updated, the slave node may determine that the identification code has been reported to the master node. Therefore, the slave node ignores the information query request and stops reporting the identification code to the master node. With the method provided in the embodiment, repeated reporting from slave nodes can be avoided, and thus communication congestion can be avoided.

In an embodiment, communication congestion is caused, due to the repeated reporting from the slave node or due to repeated transmission of the information query request by the master node for searching for a slave node. Therefore, in an embodiment, the method further includes: starting a preset timer when the information query request is send for the first time; and interrupting a communication process with the slave nodes, in a case that no response message is received from any of the slave nodes after the information query request is sent multiple times, or in a case that the timer exceeds a preset query time.

It should be understood that the timer is started when the master node starts to send the information query request for the first time. When the timer exceeds the query time, the master node interrupts the transmission of the information query request to the slave nodes, and the communication process is end.

In addition, the master node may complete communication with all the slave nodes before the timer exceeds the query time. Therefore, when the master node fails to receive any response message reported by the slave node after sending the information query request multiple times, the communication may be end. Thereby, the communication congestion caused by continuous sending the request is avoided.

Corresponding to the method as shown in Figure 1, a communication apparatus is provided according to an embodiment of the present disclosure. The apparatus is for implementing the method in Figure 1, and the apparatus is applied to a master node. Figure 2 shows a structural diagram of the apparatus. The apparatus includes a sending unit 201, a reception unit 202, and an update unit 203.

The sending unit 201 is configured to send an information query request to multiple slave nodes in a preset time period, where each of the slave nodes determines, based on identification information in the information query request, whether to report an identification code of the slave node.

The reception unit 202 is configured to obtain the identification code of the slave node from a response message, in a case that the response message reported by the slave node in response to the information query request is received within a preset report time limit.

The update unit 203 is configured to update the identification information based on the identification code, where the slave node, which reports the response message previously, stops reporting the response message to the master node based on the updated identification information, in a case that the information query request is received again.

In the apparatus according to an embodiment, the information query request is sent from the master node to multiple slave nodes in a preset time period. Each of the slave nodes determines, based on the identification information in the information query request, whether to report the identification code of the slave node. The slave node reports the response message carrying the identification code within the report time limit, in the case that the identification code is determined to be reported. On reception of the response message, the master node obtains the identification code from the response message and updates the identification information based on the identification code. On repeated reception of the information query request form the master node, the slave node may determine, based on the updated identification information, whether to report the identification code. Since the identification information is updated, the slave node may determine that the identification code has been reported to the master node. Therefore, the slave node ignores the information query request and stops reporting the identification code to the master node. With the apparatus provided in the embodiment, repeated reporting from slave nodes can be avoided, and thus communication congestion can be avoided.

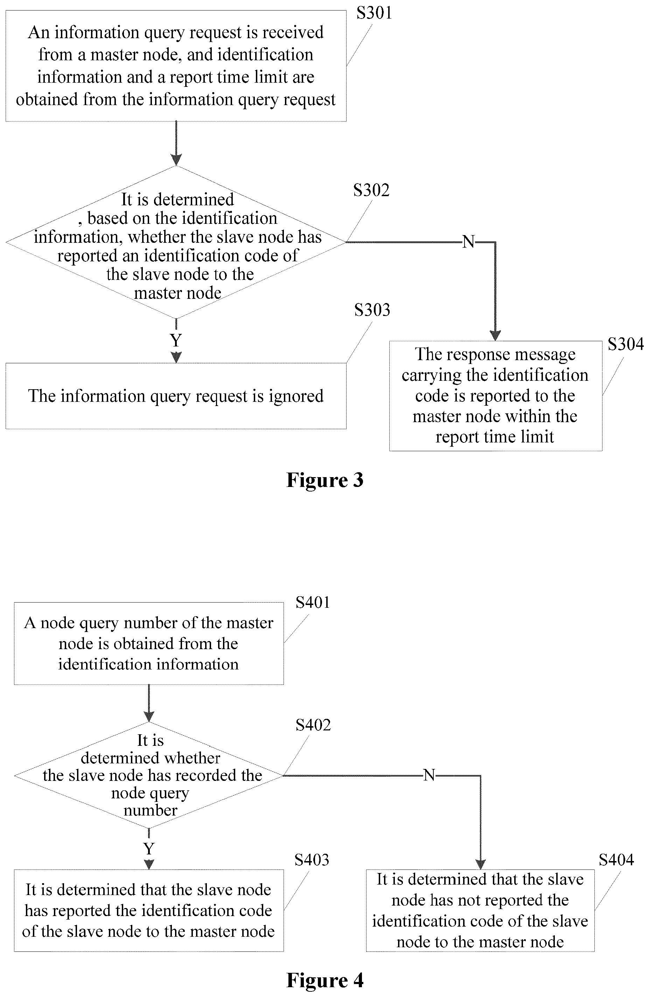

A communication method is provided in an embodiment of the present disclosure. The method may be applied to a slave node. Figure 3 shows a flow chart of the method when being applied to a slave node. The method includes steps S301 to S304.

In S301, an information query request is received from a master node, and identification information and a report time limit are obtained from the information query request.

The identification information includes a node query number of the master node and an identification code list. The node query number is a unique identification number of the master node, which is used to identify the master node. The identification code list is used to record an identification code received by the master node.

It should be noted that a slave node may receive information query requests from one or more master nodes.

In S302, it is determined, based on the identification information, whether the slave node has reported an identification code of the slave node to the master node.

The method proceeds to S303 in the case that the slave node has reported the identification code of the slave node to the master node. The method proceeds to S304 in the case that the slave node has reported the identification code of the slave node to the master node.

In S303, the information query request is ignored.

In S304, the slave node reports the response message carrying the identification code to the master node within the report time limit.

It should be noted that the identification code is generated when the slave node receives the information query request for the first time, which is used to identify the slave node.

In the method according to an embodiment of the disclosure, the slave node obtains, on reception of the information query request from the master node, the identification information and the report time limit from the information query request. Based on the identification information, the slave node determines whether the identification code has been reported to the master node. The slave node ignores the information query request if the identification code has been reported to the master node. The slave node reports the response message carrying the identification code to the master node within the report time limit if the identification code has not been reported to the master node. On reception of the response message, the master node obtains the identification code from the response message and updates the identification information. In the case that the master node sends the information query request again, the slave node may determine that the identification code has been reported to the master node based on the updated identification information. Therefore, the slave node stops reporting the identification code to the master node.

With the method according to the embodiments of the present disclosure, the slave node reports the identification code to one master node only once. Therefore, the communication congestion caused by repeated reporting is avoided.

Reference is made to a flow chart in Figure 4. In an embodiment, the S302 of determining, based on the identification information, whether the slave node has reported an identification code of the slave node to the master node may specifically include steps S401 to S404.

In S401, a node query number of the master node is obtained from the identification information.

It should be noted that the identification information includes a node query number of the master node and an identification code list.

In S402, it is determined whether the slave node has recorded the node query number.

The method proceeds to S403 in the case that the slave node has recorded the node query number. The method proceeds to S404 in the case that the slave node has not recorded the node query number.

It is to be noted that the slave node records the node query number of the master node, after reporting the response message carrying the identification code to the master node. The slave node may ignore the information query request when the information query request is received from the master node having the same node query number again.

In S403, it is determined that the slave node has reported the identification code of the slave node to the master node.

In S404, it is determined that the slave node has not reported the identification code of the slave node to the master node.

In an embodiment of the disclosure, on reception of the information query request from the master node, the slave node obtains the node query number of the master node from the identification information in the information query request, to determine whether the slave node has reported the identification code of the slave node to the master node. The slave node records the node query number of the master node, after the response message carrying the identification code is successfully reported to the master node. Thereby, it is recorded that the identification code of the slave node has been reported to the master node corresponding to the node query number.

It should be noted that a slave node may receive information query requests from multiple master nodes. When the slave node needs to report the response message carrying the identification code to multiple master nodes, the response message may be sent to master nodes corresponding to node query numbers based on the node query numbers of the master nodes.

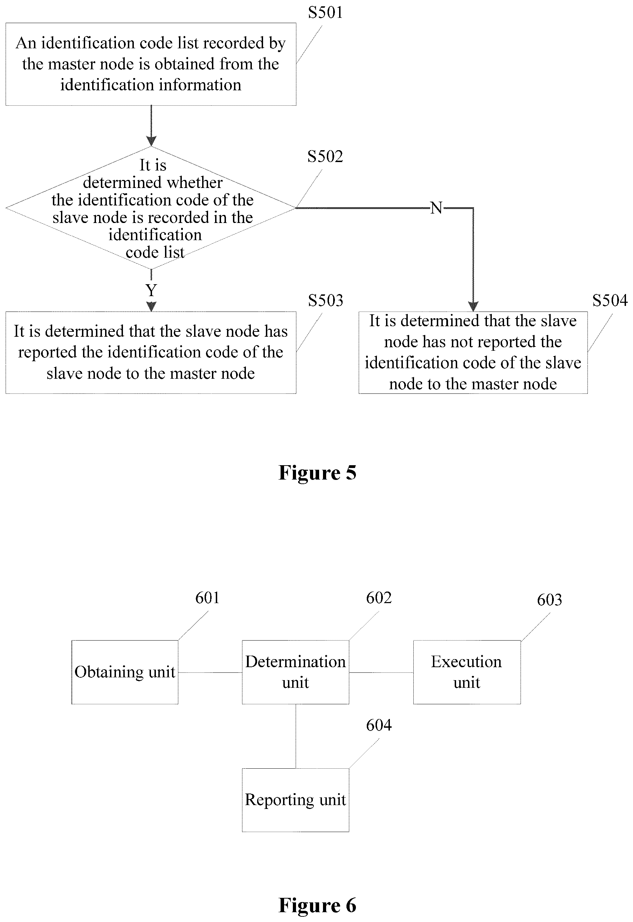

Reference is made to a flow chart in Figure 5. In an embodiment, the S302 of determining, based on the identification information, whether the slave node has reported an identification code of the slave node to the master node may specifically include steps S501 to S504.

In S501, an identification code list recorded by the master node is obtained from the identification information.

In S502, it is determined whether the identification code of the slave node is recorded in the identification code list.

The method proceeds to S503 in the case that the identification code of the slave node is recorded in the identification code list. The method proceeds to S504 in the case that the identification code of the slave node is not recorded in the identification code list.

In S503, it is determined that the slave node has reported the identification code of the slave node to the master node.

In S504, it is determined that the slave node has not reported the identification code of the slave node to the master node.

In an embodiment of the disclosure, on reception of the information query request from the master node, the slave node obtains the identification code list from the identification information. The slave node determines whether the identification code of the slave node is included in the identification code list. If the identification code of the slave node is included in the identification code list, it is determined that the slave node has reported the identification code to the master node, and the slave node may directly ignore the information query request from the master node. If the identification code of the slave node is not included in the identification code list, it is determined that the slave node has not reported the identification code to the master node, and the slave node reports the response message carrying the identification code to the master node within the report time limit.

It should be noted that on reception of the response message reported by the slave node, the master node obtains the identification code from the message and updates the identification code into the identification code list. When the information query request is sent again, the node query number, the updated identification code list and the report time limit are sent.

In an embodiment of the present disclosure, the slave node reports the identification code by reporting the response message carrying the identification code. Therefore, in a process, the slave node determines that the identification code is not reported to the master node, and needs to report the response message carrying the identification to the master node within the report time limit.

This process may specifically include: detecting whether the slave node generates the response message carrying the identification code; starting a preset reporting mechanism and generating the response message carrying the identification code in the case that the slave node does not generate the response message carrying the identification code; and reporting the response message carrying the identification code to the master node within the report time limit in a competition manner, according to the reporting mechanism.

It should be noted that the reporting mechanism may be Carrier Sense Multiple Access with Collision Avoid (CSMA/CA) mechanism. In the reporting mechanism, the response message is reported within the report time limit in a competition manner.

Under the reporting mechanism, in a process of reporting response messages in the competition manner, a timer is activated to determine whether the reporting is successful within the report time limit. If the response message is not reported to the master node within the report time limit, it is determined that the reporting mechanism fails in competition and the reporting of the response messages to the master node is suspended. Due to failure of the competition, the slave node may not record the node query number of the master node, and the identification code of the slave node is not recorded in the identification code list of the master node.

In an embodiment, the slave node generates the response message of the slave node and stores the generated response message. When it is necessary to report the identification code to any master node, the slave node may report the response message in the competition manner through the reporting mechanism. A slave node having a strong communication signal is more likely to report successfully. The slave node may not report again once the identification code is reported successfully to all master nodes. Thereby, communication congestion is avoided.

Corresponding to the method as shown in Figure 3, a communication apparatus is provided in an embodiment of the present disclosure. The apparatus is for implementing the method in Figure 3, and the apparatus is applied to a slave node. Figure 6 shows a structural diagram of the apparatus. The apparatus includes an obtaining unit 601, a determination unit 602, an execution unit 603, and a reporting unit 604.

The obtaining unit 601 is configured to receive an information query request from a master node; and obtain, from the information query request, identification information and a report time limit.

The determination unit 602 is configured to determine, based on the identification information, whether the slave node has reported an identification code of the slave node to the master node.

The execution unit 603 is configured to ignore the information query request, in the case that the slave node has reported the identification code of the slave node to the master node.

The reporting unit 604 is configured to report a response message carrying the identification code to the master node within the report time limit, in the case that the slave node has not reported the identification code of the slave node to the master node.

In the apparatus according to an embodiment of the disclosure, on reception of the information query request from the master node, the slave node obtains the identification information and the report time limit from the information query request. Based on the identification information, the slave node determines whether the identification code has been reported to the master node. The slave node ignores the information query request if the identification code has been reported to the master node. The slave node reports the response message carrying the identification code to the master node within the report time limit if the identification code has not been reported to the master node. On reception of the response message, the master node obtains the identification code from the response message and updates the identification information. When the master node sends the information query request again, the slave node may determine that the identification code has been reported to the master node based on the updated identification information. Therefore, the slave node stops reporting the identification code to the master node.

With the apparatus according to the embodiments of the present disclosure, the slave node reports the identification code to one master node only once. Therefore, communication congestion caused by repeated reporting is avoided.

Specific implementations of the embodiments and their derivatives are all within the protection scope of the present disclosure.

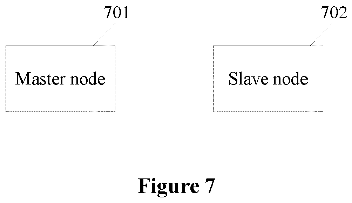

Figure 7 is a block diagram of a communication system according to an embodiment of the present disclosure. As shown in Figure 7, the communication system includes at least one master node 701 and at least one slave node 702.

The at least one master node 701 communicates with the at least one slave node 702, and performs the communication method according to any one of following.

The method includes: sending an information query request to multiple slave nodes in a preset time period, where each of the slave nodes determines, based on identification information in the information query request, whether to report an identification code of the slave node; obtaining the identification code of the slave node from a response message, in a case that the response message reported by the slave node in response to the information query request is received within a preset report time limit; and updating the identification information based on the identification code, where the slave node, which reports the response message previously, stops reporting the response message to the master node based on the updated identification information, in a case that the information query request is received again.

In an embodiment, the identification information includes a node query number of the master node and an identification code list.

The node query number is a unique identification number of the master node, the node query number is for identifying the master node; and the identification code list is for recording an identification code received by the master node.

In an embodiment, the updating the identification information based on the identification code includes: updating the identification code to the identification code list in the identification information.

In an embodiment, the method further includes: starting a preset timer when the information query request is sent for the first time; and interrupting a communication process with the slave nodes, in the case that no response message is received from any of the slave nodes after the information query request is sent multiple times, or in the case that the timer exceeds a preset query time.

The at least one slave node is configured to perform the communication method according to any one of the following.

The method includes: receiving an information query request from a master node, and obtaining, from the information query request, identification information and a report time limit; determining, based on the identification information, whether the slave node has reported an identification code of the slave node to the master node; ignoring the information query request, in a case that the slave node has reported the identification code of the slave node to the master node; and reporting a response message carrying the identification code to the master node within the report time limit, in a case that the slave node has not reported the identification code of the slave node to the master node.

In an embodiment, the determining, based on the identification information, whether the slave node has reported an identification code of the slave node to the master node includes: obtaining, from the identification information, a node query number of the master node; determining whether the slave node has recorded the node query number; determining that the slave node has reported the identification code of the slave nod to the master node, in a case that the slave node has recorded the node query number; and determining that the slave node has not reported the identification code of the slave node to the master node, in a case that the slave node has not recorded the node query number.

In an embodiment, the method further includes: recording the node query number of the master node, after the slave node reports the response message carrying the identification code to the master node.

In an embodiment, the determining, based on the identification information, whether the slave node has reported an identification code of the slave node to the master node includes: obtaining, from the identification information, an identification code list recorded by the master node; determining whether the identification code of the slave node is recorded in the identification code list; determining that the slave node has reported the identification code of the slave node to the master node, in a case that the identification code of the slave node is recorded in the identification code list; and determining that the slave node has not reported the identification code of the slave node to the master node, in a case that the identification code of the slave node is not recorded in the identification code list.

In an embodiment, the method further includes: generating the identification code of the slave node in a case that the salve node receives the information query request for the first time.

In an embodiment, the reporting a response message carrying the identification code to the master node within the report time limit includes: detecting whether the slave node generates the response message carrying the identification code; starting a preset reporting mechanism and generating the response message carrying the identification code, in a case that the slave node does not generate the response message carrying the identification code; and reporting the response message carrying the identification code to the master node within the report time limit in a competition manner, according to the reporting mechanism.

In an embodiment, the method further includes: suspending the reporting of the response message to the master node, in a case that the slave node fails to report the response message to the master node within the report time limit.

Based on the above embodiments, the communication system provided in the present disclosure may be applied to a solar photovoltaic power generation system equipped with a power optimizer. An inverter and the optimizer in the solar photovoltaic power generation system communicate with each other through power line communication (PLC). The inverter includes a master node controller of a PLC, and the optimizer serves as a slave node of the PLC.

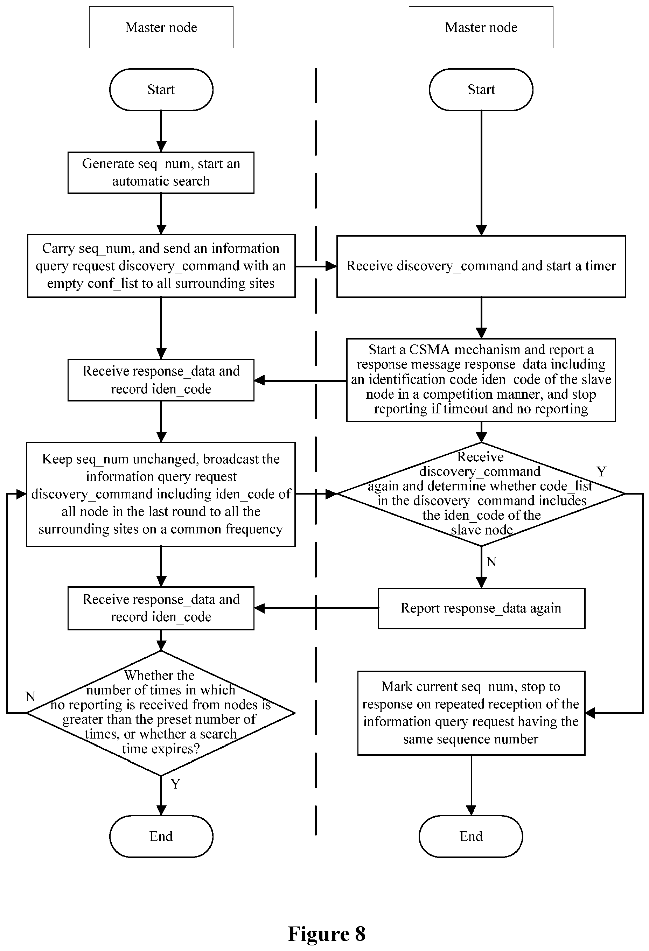

Reference is made to Figure 8. The inverter serves as a master node and the optimizer serves as a slave node. The communication between the master node and the slave node includes the following processes.

1) The master node randomly generates a node query number seq_num before starting an automatic search. The query number remains unchanged until the end of the automatic search.

2) The master node starts the automatic search and sends an information query request discovery_command to all surrounding sites. The discovery_command carries the seq_num, a maximum timeout time maxseq_time (that is, a report time limit) for the reporting of the slave node, and an identification code list conf_list of slave nodes searched in a previous search. In the transmission of the information query request for the first time, the conf_list is empty.

3) Since the conf_list is empty in the transmission of the information query request for the first time, the slave node starts a CSMA/CA mechanism to report a response message response_data in a competition manner, in response to reception of the discovery_command, and starts a timer synchronously. The response_data carries a generated identification code iden_code for identifying a site of the slave node. If the slave fails to report due to failure of competition when the timer reaches the maxseq_time, the slave node stops reporting, and waits to receive the discovery_command next time.

4) On reception of response_data reported by a neighboring node, the master node records the iden_code of the reporting site.

5) The master node keeps seq_num unchanged, repackets, and broadcasts the information query request discovery _command to all the surrounding sites again. Here, the information query request discovery_command carries a list code_list composed of iden_code of all nodes that successfully report in the previous round.

6) On reception of the discovery_command, a neighboring node matches the iden_code in the identification code list code_list. If an iden_code of the node is not recorded in the identification code list code_list, the node reports the response_data again. If the random_code of the node is recorded in the identification code list code_list, the node does not report the response_data again and marks that the current seq_num has been reported. Thereby, the request message having the same sequence number, if received again, is not responded by the node.

7) On reception of the response_data reported by the neighboring nodes, the master node records the iden_code of the reporting site.

8) The above steps 5) to 7) are repeated, until no neighboring slave node reports or the time expires.

The embodiments in the present disclosure are described in a progressive manner. The same and similar parts among the embodiments may be referred to each other. Each of the embodiments focuses on its differences from the other embodiments. The system or system embodiments are essentially similar to the method embodiments, and therefore are described in brief. Reference may be made to the description of the method embodiments for relevant details of the system or system embodiments. The systems and system embodiments described above are only illustrative. The units described as separate components may or may not be physically separated. Components shown as units may or may not be a physical unit, that is, the components may be located at the same position or distributed over multiple network units. Some or all of the modules may be adopted based on an actual need to achieve the objective of the solutions in the embodiments of the present disclosure. Those of ordinary skills in the art can understand and implement the method without any creative effort.

Those skilled in the art may further understand that, units and algorithm steps described in conjunction with the embodiments disclosed herein may be realized by electronic hardware, computer software or a combination thereof.

In order to clearly describe interchangeability of the hardware and the software, the composition and steps of each embodiment are generally described above based on functions. Whether a function is to be implemented by hardware or software depends on a particular application of the technical solutions and a design constraint. Those skilled in the art may implement the described functions through different methods for each specific application. Such implementation should not be considered going beyond the scope of the present disclosure.

The above description of the disclosed embodiments enables those skilled in the art to implement or use the present disclosure. The invention is defined by the appended claims.

## Claims

1. A communication method, applied to a communication system comprising at least one master node (701) and at least one slave node (702), wherein the method comprises:
sending, by the at least one master node, an information query request to the at least one slave node in a preset time period(S101);
receiving, by the at least one slave node, the information query request from the at least one master node; and obtaining, by the at least one slave node from the information query request, identification information and a report time limit (S301);
determining, by the at least one slave node based on the identification information, whether the at least one slave node has reported an identification code of the slave node to the at least one master node (S302);
ignoring, by the at least one slave node, the information query request in a case that the at least one slave node has reported the identification code of the at least one slave node to the at least one master node (S303);
reporting, by the at least one slave node, a response message carrying the identification code to the master node within the report time limit in a case that the slave node has not reported the identification code of the slave node to the master node (S304);
obtaining, by the at least one master node, the identification code of the at least one slave node from the response message, in a case that the response message reported by the at least one slave node in response to the information query request is received within the preset report time limit (S102); and
updating, by the at least one master node, the identification information based on the identification code (S103), wherein the at least one slave node, which reports the response message previously, stops reporting the response message to the at least one master node based on the updated identification information, in a case that the information query request is received again.

2. The method according to claim 1, wherein the identification information comprises a node query number of the master node and an identification code list;
the node query number is a unique identification number of the master node, and the node query number is for identifying the master node; and
the identification code list is for recording an identification code received by the master node.

3. The method according to claim 1 or 2, wherein the updating the identification information based on the identification code comprises:
updating the identification code to an identification code list in the identification information.

4. The method according to claim 1, further comprising:
starting a preset timer when the information query request is sent for a first time; and
interrupting a communication process with the slave nodes, in a case that no response message is received from any of the slave nodes after the information query request is sent a plurality of times, or in a case that the timer exceeds a preset query time.

5. The method according to claim 1, wherein the determining, based on the identification information, whether the slave node has reported the identification code of the slave node to the master node comprises:
obtaining a node query number of the master node from the identification information (S401);
determining whether the slave node has recorded the node query number (S402);
determining that the slave node has reported the identification code of the slave node to the master node, in a case that the slave node has recorded the node query number (S403); and
determining that the slave node has not reported the identification code of the slave node to the master node, in a case that the slave node has not recorded the node query number (S404).

6. The method according to claim 5, further comprising:
recording the node query number of the master node, after the slave node reports the response message carrying the identification code to the master node.

7. The method according to claim 1, wherein the determining, based on the identification information, whether the slave node has reported the identification code of the slave node to the master node comprises:
obtaining, from the identification information, an identification code list recorded by the master node (S501);
determining whether the identification code of the slave node is recorded in the identification code list (S502);
determining that the slave node has reported the identification code of the slave node to the master node, in a case that the identification code of the slave node is recorded in the identification code list (S5031); and
determining that the slave node has not reported the identification code of the slave node to the master node, in a case that the identification code of the slave node is not recorded in the identification code list (S504).

8. The method according to claim 1, further comprising:
generating the identification code of the slave node, in a case that the salve node receives the information query request for a first time.

9. The method according to claim 1, wherein the reporting the response message carrying the identification code to the master node within the report time limit comprises:
detecting whether the slave node generates the response message carrying the identification code;
starting a preset reporting mechanism and generating the response message carrying the identification code, in a case that the slave node does not generate the response message carrying the identification code; and
reporting the response message carrying the identification code to the master node within the report time limit in a competition manner, according to the reporting mechanism.

10. The method according to claim 1 or 9, further comprising:
suspending reporting of the response message to the master node, in a case that the slave node fails to report the response message to the master node within the report time limit.

11. A communication system, comprising at least one master node (701) and at least one slave node (702), wherein the communication system performs the method according to claim 1.

## Patentansprüche

1. Kommunikationsverfahren, das auf ein Kommunikationssystem angewendet wird, das mindestens einen Master-Knoten (701) und mindestens einen Slave-Knoten (702) umfasst, wobei das Verfahren umfasst:
Senden einer Informationsabfrageanforderung durch den mindestens einen Master-Knoten an den mindestens einen Slave-Knoten innerhalb eines voreingestellten Zeitraums (S101);
Empfangen der Informationsabfrageanforderung durch den mindestens einen Slave-Knoten von dem mindestens einen Master-Knoten; und Ermitteln von Identifikationsinformationen und einer Meldefrist durch den mindestens einen Slave-Knoten aus der Informationsabfrageanforderung (S301);
Ermitteln durch den mindestens einen Slave-Knoten auf der Grundlage der Identifikationsinformationen, ob der mindestens eine Slave-Knoten einen Identifikationscode des Slave-Knotens an den mindestens einen Master-Knoten gemeldet hat (S302);
Ignorieren der Informationsabfrageanforderung durch den mindestens einen Slave-Knoten in dem Fall, dass der mindestens eine Slave-Knoten den Identifikationscode des mindestens einen Slave-Knotens an den mindestens einen Master-Knoten gemeldet hat (S303);
Übermitteln einer Antwortnachricht, die den Identifikationscode enthält, durch den mindestens einen Slave-Knoten an den Master-Knoten innerhalb der Meldefrist, falls der Slave-Knoten den Identifikationscode des Slave-Knotens nicht an den Master-Knoten übermittelt hat (S304);
Ermitteln des Identifikationscodes des mindestens einen Slave-Knotens durch den mindestens einen Master-Knoten aus der Antwortnachricht, falls die vom mindestens einen Slave-Knoten als Antwort auf die Informationsabfrage gemeldete Antwortnachricht innerhalb der voreingestellten Meldefrist empfangen wird (S102); und
Aktualisieren der Identifikationsinformationen durch den mindestens einen Master-Knoten auf der Grundlage des Identifikationscodes (S103), wobei der mindestens eine Slave-Knoten, der zuvor die Antwortnachricht übermittelt hat, die Übermittlung der Antwortnachricht an den mindestens einen Master-Knoten auf der Grundlage der aktualisierten Identifikationsinformationen einstellt, falls die Informationsabfrageanforderung erneut empfangen wird.

2. Verfahren nach Anspruch 1, wobei die Identifikationsinformationen eine Knotenabfragenummer des Master-Knotens und eine Identifikationscodeliste umfassen;
die Knotenabfragenummer eine eindeutige Identifikationsnummer des Master-Knotens ist und der Master-Knoten anhand der Knotenabfragenummer identifiziert wird; und
die Identifikationscodeliste dazu dient, einen vom Master-Knoten empfangenen Identifikationscode zu speichern.

3. Verfahren nach Anspruch 1 oder 2, wobei das Aktualisieren der Identifikationsinformationen auf der Grundlage des Identifikationscodes umfasst:
Aktualisieren des Identifikationscodes in einer Identifikationscodeliste innerhalb der Identifikationsinformationen.

4. Verfahren nach Anspruch 1, das ferner umfasst:
Starten eines voreingestellten Zeitgebers, wenn die Informationsabfrageanforderung zum ersten Mal gesendet wird; und
Unterbrechen eines Kommunikationsprozesses mit den Slave-Knoten, falls nach mehrmaligem Senden der Informationsabfrageanforderung von keinem der Slave-Knoten eine Antwortnachricht empfangen wird oder falls der Zeitgeber eine voreingestellte Abfragezeit überschreitet.

5. Verfahren nach Anspruch 1, wobei das Feststellen auf der Grundlage der Identifikationsinformationen, ob der Slave-Knoten den Identifikationscode des Slave-Knotens an den Master-Knoten gemeldet hat, umfasst:
Erhalten einer Knotenabfragenummer des Master-Knotens aus den Identifikationsinformationen (S401);
Ermitteln, ob der Slave-Knoten die Knotenabfragenummer aufgezeichnet hat (S402);
Ermitteln, dass der Slave-Knoten den Identifikationscode des Slave-Knotens an den Master-Knoten gemeldet hat, falls der Slave-Knoten die Knotenabfragenummer gespeichert hat (S403); und
Ermitteln, dass der Slave-Knoten den Identifikationscode des Slave-Knotens nicht an den Master-Knoten gemeldet hat, falls der Slave-Knoten die Knotenabfragenummer nicht gespeichert hat (S404).

6. Verfahren nach Anspruch 5, das ferner umfasst:
Speichern der Knotenabfragenummer des Master-Knotens, nachdem der Slave-Knoten die Antwortnachricht, die den Identifikationscode enthält, an den Master-Knoten übermittelt hat.

7. Verfahren nach Anspruch 1, wobei das Ermitteln, basierend auf den Identifikationsinformationen, ob der Slave-Knoten den Identifikationscode des Slave-Knotens an den Master-Knoten gemeldet hat, umfasst:
Erhalten einer vom Master-Knoten gespeicherten Identifikationscodeliste aus den Identifikationsinformationen (S501);
Ermitteln, ob der Identifikationscode des Slave-Knotens in der Identifikationscodeliste gespeichert ist (S502);
Ermitteln, dass der Slave-Knoten den Identifikationscode des Slave-Knotens an den Master-Knoten gemeldet hat, falls der Identifikationscode des Slave-Knotens in der Identifikationscodeliste gespeichert ist (S5031); und
Ermitteln, dass der Slave-Knoten den Identifikationscode des Slave-Knotens nicht an den Master-Knoten gemeldet hat, falls der Identifikationscode des Slave-Knotens nicht in der Identifikationscodeliste gespeichert ist (S504).

8. Verfahren nach Anspruch 1, das ferner umfasst:
Erzeugen des Identifikationscodes des Slave-Knotens, falls der Slave-Knoten die Informationsabfrageanforderung zum ersten Mal empfängt.

9. Verfahren nach Anspruch 1, wobei das Übermitteln der Antwortnachricht, die den Identifikationscode enthält, an den Master-Knoten innerhalb der Meldefrist umfasst:
Erkennen, ob der Slave-Knoten die Antwortnachricht erzeugt, die den Identifikationscode enthält;
Starten eines voreingestellten Meldeverfahrens und das Erzeugen der Antwortnachricht, die den Identifikationscode enthält, falls der Slave-Knoten die Antwortnachricht, die den Identifikationscode enthält, nicht erzeugt; und
Melden der Antwortnachricht, die den Identifikationscode enthält, an den Master-Knoten innerhalb der Meldefrist im Wettbewerbsverfahren gemäß dem Meldeverfahren.

10. Verfahren nach Anspruch 1 oder 9, das ferner umfasst:
Aussetzen der Meldung der Antwortnachricht an den Master-Knoten, falls der Slave-Knoten die Antwortnachricht nicht innerhalb der Meldefrist an den Master-Knoten meldet.

11. Kommunikationssystem, umfassend mindestens einen Master-Knoten (701) und mindestens einen Slave-Knoten (702), wobei das Kommunikationssystem das Verfahren gemäß Anspruch 1 ausführt.

## Revendications

1. Procédé de communication appliqué à un système de communication comprenant au moins un nœud maître (701) et au moins un nœud esclave (702), le procédé comprenant :
l'envoi, par ledit au moins un nœud maître, d'une demande d'interrogation d'informations audit au moins un nœud esclave pendant une période prédéfinie (S101) ;
la réception, par ledit au moins un nœud esclave, de la demande d'interrogation d'informations provenant dudit au moins un nœud maître ; et l'obtention, par ledit au moins un nœud esclave à partir de la demande d'interrogation d'informations, d'informations d'identification et d'une limite de temps de rapport (S301) ;
la détermination, par ledit au moins un nœud esclave, sur la base des informations d'identification, de savoir si ledit au moins un nœud esclave a signalé un code d'identification du nœud esclave audit au moins un nœud maître (S302) ;
le fait d'ignorer, par ledit au moins un nœud esclave, la demande d'interrogation d'informations dans le cas où ledit au moins un nœud esclave a signalé le code d'identification dudit au moins un nœud esclave audit au moins un nœud maître (S303) ;
le signalement, par ledit au moins un nœud esclave, d'un message de réponse portant le code d'identification au nœud maître dans la limite de temps de rapport dans le cas où le nœud esclave n'a pas signalé le code d'identification du nœud esclave audit nœud maître (S304) ;
l'obtention, par ledit au moins un nœud maître, du code d'identification dudit au moins un nœud esclave à partir du message de réponse dans le cas où le message de réponse signalé par ledit au moins un nœud esclave en réponse à la demande d'interrogation d'informations est reçu dans la limite de temps de rapport prédéfinie (S102) ; et
la mise à jour, par ledit au moins un nœud maître, des informations d'identification sur la base du code d'identification (S103), ledit au moins un nœud esclave ayant précédemment signalé le message de réponse cessant de signaler le message de réponse audit au moins un nœud maître sur la base des informations d'identification mises à jour dans le cas où la demande d'interrogation d'informations est à nouveau reçue.

2. Le procédé selon la revendication 1, dans lequel les informations d'identification comprennent un numéro d'interrogation de nœud du nœud maître, et une liste de codes d'identification ;
le numéro d'interrogation de nœud étant un numéro d'identification unique du nœud maître et le numéro d'interrogation de nœud servant à identifier le nœud maître ; et
la liste de codes d'identification servant à enregistrer un code d'identification reçu par le nœud maître.

3. Le procédé selon la revendication 1 ou 2, dans lequel la mise à jour des informations d'identification sur la base du code d'identification comprend :
la mise à jour d'une liste de codes d'identification comprise dans les informations d'identification par ajout du code d'identification à ladite liste.

4. Le procédé selon la revendication 1, comprenant en outre :
le démarrage d'un temporisateur prédéfini lorsque la demande d'interrogation d'informations est envoyée pour la première fois ; et
l'interruption d'un processus de communication avec les nœuds esclaves dans le cas où aucun message de réponse provenant de l'un des nœuds esclaves n'est reçu après que la demande d'interrogation d'informations a été envoyée plusieurs fois, ou dans le cas où le temporisateur dépasse une durée d'interrogation prédéfinie.

5. Le procédé selon la revendication 1, dans lequel la détermination, sur la base des informations d'identification, de savoir si le nœud esclave a signalé le code d'identification du nœud esclave au nœud maître comprend :
l'obtention d'un numéro d'interrogation de nœud du nœud maître à partir des informations d'identification (S401) ;
la détermination de savoir si le nœud esclave a enregistré le numéro d'interrogation de nœud (S402) ;
la détermination de savoir si le nœud esclave a signalé le code d'identification du nœud esclave au nœud maître dans le cas où le nœud esclave a enregistré le numéro d'interrogation de nœud (S403) ; et
la détermination de savoir si le nœud esclave n'a pas signalé le code d'identification du nœud esclave au nœud maître dans le cas où le nœud esclave n'a pas enregistré le numéro d'interrogation de nœud (S404).

6. Le procédé selon la revendication 5, comprenant en outre :
l'enregistrement du numéro d'interrogation de nœud du nœud maître après que le nœud esclave a signalé au nœud maître le message de réponse portant le code d'identification.

7. Le procédé selon la revendication 1, dans lequel la détermination, sur la base des informations d'identification, de savoir si le nœud esclave a signalé le code d'identification du nœud esclave au nœud maître comprend :
l'obtention, à partir des informations d'identification, d'une liste de codes d'identification enregistrée par le nœud maître (S501) ;
la détermination de savoir si le code d'identification du nœud esclave est enregistré dans la liste de codes d'identification (S502) ;
la détermination de savoir si le nœud esclave a signalé le code d'identification du nœud esclave au nœud maître dans le cas où le code d'identification du nœud esclave est enregistré dans la liste de codes d'identification (S503) ; et
la détermination de savoir si le nœud esclave n'a pas signalé le code d'identification du nœud esclave au nœud maître dans le cas où le code d'identification du nœud esclave n'est pas enregistré dans la liste de codes d'identification (S504).

8. Le procédé selon la revendication 1, comprenant en outre :
la génération du code d'identification du nœud esclave dans le cas où le nœud esclave reçoit la demande d'interrogation d'informations pour la première fois.

9. Le procédé selon la revendication 1, dans lequel le signalement du message de réponse portant le code d'identification au nœud maître dans la limite de temps de rapport comprend :
la détection du fait que le nœud esclave a généré le message de réponse portant le code d'identification ;
le démarrage d'un mécanisme de rapport prédéfini et la génération du message de réponse portant le code d'identification dans le cas où le nœud esclave n'a pas généré le message de réponse portant le code d'identification ; et
le signalement du message de réponse portant le code d'identification au nœud maître dans la limite de temps de rapport de manière concurrente conformément au mécanisme de rapport.

10. Le procédé selon la revendication 1 ou 9, comprenant en outre :
la suspension du signalement du message de réponse au nœud maître dans le cas où le nœud esclave n'est pas en mesure de signaler le message de réponse au nœud maître dans la limite de temps de rapport.

11. Système de communication comprenant au moins un nœud maître (701) et au moins un nœud esclave (702), le système de communication mettant en œuvre le procédé selon la revendication 1.
